# EUROPEAN PATENT SPECIFICATION

(11) **EP 0 666 969 B1**
(45) Date of publication and mention of the grant of the patent: **19.03.1997**
(21) Application number: 94900082.2
(22) Date of filing: 28.10.1993
(51) Int. Cl.: F16H 37/04, F16H 1/20

(54) **A RIGHT-ANGLE GEAR REDUCTION UNIT**
RECHTWINKLIGE UNTERSETZUNGSGETRIEBEEINHEIT
ENSEMBLE DE REDUCTION D'ENGRENAGE A ANGLE DROIT

(30) Priority: 04.11.1992 IT PD920196
(43) Date of publication of application: 16.08.1995
(73) Proprietor: CASAROTTO, G. & C. S.R.L., I-45021 Badia Polesine (IT)
(72) Inventor: CASAROTTO, Giorgio, I-45021 Badia Polesine (IT)
(74) Representative: Cantaluppi, Stefano
(86) International application number: EP9302999
(87) International publication number: WO9410482

(56) References cited:
- FR-A- 2 211 085
- FR-A- 2 220 028
- GB-A- 1 016 849
- US-A- 2 187 614

## Description

### Technical Field

This invention relates to a right-angle gear reduction unit of a type which comprises a case having two opposite walls, a drive input shaft, a bevel gear pair comprising a pinion and gear in mesh relationship with each other, a first gear reduction stage between the drive input shaft and the bevel pinion gear in said pair, a drive output shaft laid within said case along an orthogonal axis to the axis of the drive input shaft. and a second reduction stage between the drive output shaft and the bevel gear in said pair.

A reduction unit having the above features, which are the features of the preamble of claim 1, is known from FR-A-2 211 085.

In some particular applications, the need exists for a number of the above-outlined reduction units to be clustered in parallel such that they can be operated in a synchronized fashion. Also, auxiliary devices may have to be connected to one reduction unit such as tachometer generators, brakes, etc.

In either instances, the reduction units are required to include an additional drive output shaft, drivingly coupled to the input shaft such that said output shaft will drive the following reduction units and/or said auxiliary devices through the drive train associated with the input shaft.

### Background Art

In prior art arrangements, this requirement is met by providing a second pinion gear in mesh with the gear in the bevel gear pair and extending outward from the case. This second pinion gear is, therefore, synchronized with the drive input shaft and available for any further coupling.

This prior construction has some drawbacks, among which is that making, assembling, and adjusting two or more pinions to properly mesh with one and the same gear is a difficult task because of each gear-and-pinion pair being designed to be a near-univocal matched combination, both construction- and assembly-wise.

Further, the bevel gear pair is highly stressed because it has to transfer the through-power directed to the following reduction units, additionally to transferring the power associated with its drive output shaft.

Also, the efficiency of each gear wheel engaged in the reduction unit is other than unity, thereby the presence of the second pinion results in decreased overall efficiency of the reduction unit.

The underlying technical problem of this invention is to provide a reduction unit whose construction and operation are conceived to remove the drawbacks with which the above-mentioned prior art is beset.

### Disclosure of the Invention

This problem is solved according to the invention by a reduction unit according to claim 1.

### Brief Description of Drawings

The invention will now be described with reference to two embodiments thereof shown, by way of example and not of limitation, in the accompanying drawings, where:

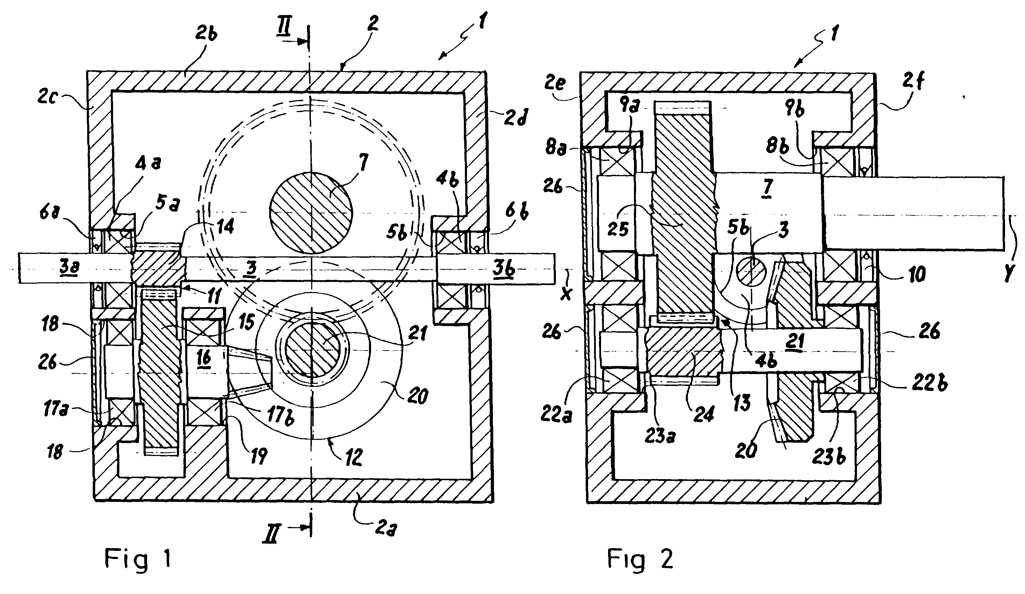

Figure 1 is a longitudinal section taken through a reduction unit according to the invention; and
Figure 2 is a cross-section taken through said reduction unit along line II-II in Figure 1.
Figure 3 is a partial view of another embodiment of the invention in longitudinal section:
Figure 4 is a detail of a modified form of the embodiment of figure 3;
Figure 5 is a sectional view taken at line V-V of figure 3.

### Best Mode of Carrying Out the Invention

With reference to the drawing figures, shown at 1 is a reduction unit comprising a case 2 in the form of a parallelepipedon having a base 2a juxtaposed to a top wall 2b, and four side walls 2c,d,e,f in juxtaposed pairs. A drive input shaft 3 having an axis X is supported, via bearings 4a,b housed in respective blocks 5a,b, on the walls 2c,d. Each block is provided with a respective seal 6a,b. A drive output shaft 7 having an axis Y is supported, via bearings 8a,b housed in respective blocks 9a,b, on the opposite walls 2e,f. The block 9b has a seal 10.

The reduction unit 1 further comprises a first reduction stage, generally shown at 11, a hypoid bevel gear pair 12 and a second or final reduction stage 13. The first reduction stage 11 is comprised of two spur gears 14 and 15 keyed to the drive input shaft 3 and to a pinion 16 of the bevel gear pair 12, respectively.

The pinion 16 is supported with its axis parallel to the axis X of the case 2 by means of bearings 17a,b which are respectively housed in a block 18 on the wall 2c and a block 19 standing on the base 2a.

The bevel gear pair 12 further comprises a gear 20 keyed to a layshaft 21. The latter is supported in bearings 22a,b mounted in blocks 23a,b formed on the walls 2e,f.

The final reduction stage 13 comprises two spur gears 24 and 25 keyed to the layshaft 21 and the output shaft 7, respectively.

The bearing blocks 9a, 23a,b and 18 are shut to the outside by covers, all denoted by 26.

Note that the input shaft 3 extends with both of its opposite axial ends 3a,b outwards from the case 2, thereby it can be operated from either end, or one end can be used for coupling to it such accessories as brakes, tachometer generators, or cascaded following reduction units.

With this construction feature, the wheelwork of the reduction unit 1, including the first and second reduction stages and the bevel gear pair, are only imposed the power transferred to the output shaft 7 and unaffected by the so-called through-power applied to the opposed end of the input shaft 3 to which the input power is transferred.

This structure may be used to provide a conventional type reduction unit, as by arranging for the shaft 3 to be terminated with one of its ends 3a,b within the case outline and shutting off the corresponding blocks 5a or 5b by means of a cover 26.

In the example shown, the input shaft 3 extends between the output shaft 7 and the layshaft 21. In this instance, the distance separating the axis of the input shaft 3 from the axis of the pinion 16 is small, but may be increased by shifting in position the pinion 16 relative to the gear 20 in the hypoid pair 12.

In addition, the drive input shaft locates approximately centrally in the case.

According to a second embodiment (not shown) of the invention, the input shaft 3 may be positioned between the output shaft 7 and the top wall 2b of the case 2.

In this second embodiment, compared to the former example, the distance between the axis of the input shaft 3 and the axis of the pinion 16 is greater.

Additionally, the drive input shaft lies off-centered in the case.

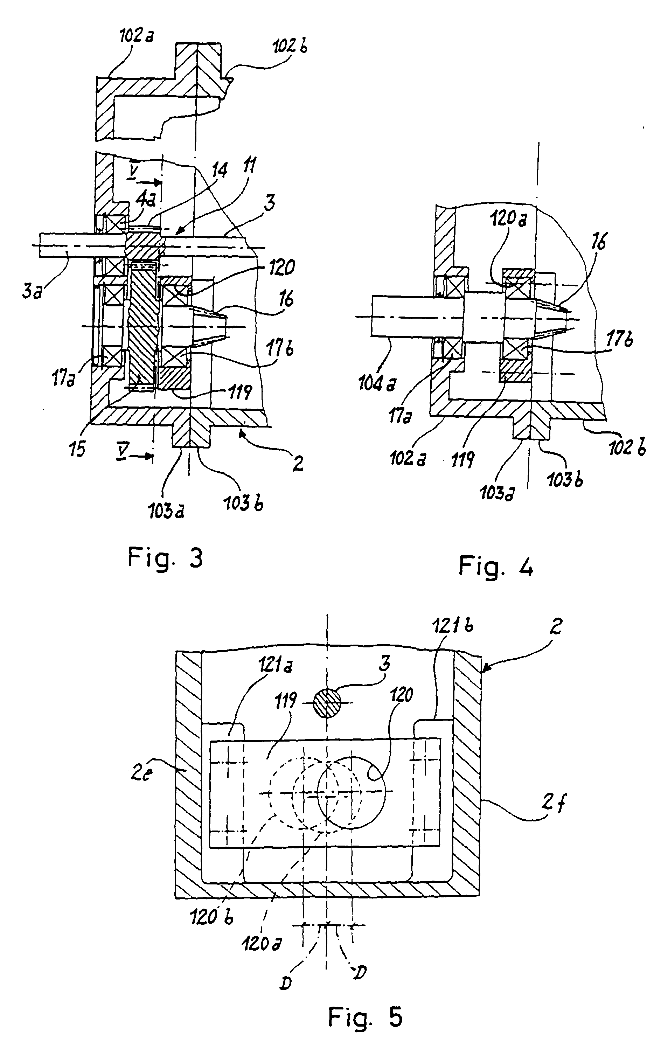

According to another embodiment of the invention, shown in figures 3 to 5, the case 2 may be construed by means of two separate case elements 102a, 102b which are removably and interchangeably coupled to each other at respective coupling flanges 103a,b. The coupling is obtained by conventional means such as coupling bolts.

This construction is recommended when the same case 2, or at least the element 102b thereof, has to be used in connection with different models of reduction units. It is for example envisageable that the same case element 102b be suitable for housing both reduction units where the first reduction stage is omitted (fig. 4) or where relatively high reduction rates are provided at the bevel gear pair 12.

In the first alternative, the axis of the pinion 16 is generally symetrically centered between the walls 2e and 2f of the case 2 and the input shaft is obtained by a tail 104a of the pinion shaft.

In this second alternative, especially when the reduction unit is designed with the aim of limiting as far as possible the distance between the side walls 2e and 2f, it is required that the axis of the pinion 16 be offset by a distance D relatively to the centered position, otherwise the bevel gear 20 of the pair 12 could interfere with the drive input shaft 3.

In order to fit both cases, the block 19 includes a support member in the form of a plate element 119 with a seat 120 housing the bearing 17b; the plate element 119 is removably and interchangeably fixed to the case element 102b by means of bolts not shown at two sholders 121a,b projecting from the respective side walls 2e,f. The seat 120 is machined in the plate element 119 at the position required for the pinion 16. Different plate elements with seats 120a or 120b can be prepared at low cost for a different position of the pinion 16. These different plate elements are to be used in connection with different case elements 102a.

The reduction unit 1 operates as follows. Assume that the input drive is applied to the end 3a of the drive input shaft 3; the latter will rotate the gear 14 in the first reduction stage 11, and through the gear 15, transfer the drive to the pinion 16 and the gear 20 of the bevel gear pair 12. Through the layshaft 21, a corresponding rotation of the gear 24 in the final reduction stage 13 and transfer of drive to the gear 25 is then accomplished to rotate the output shaft 7.

It will be appreciated that no through-power is transferred via the reduction unit wheelworks.

A major advantage afforded by the invention is represented by the omission of a second pinion in mesh with the gear of the bevel pair to operate following reduction units or auxiliary devices. This is effective to remove all of the drawbacks previously discussed.

Further, with the reduction unit providing for a symmetrical configuration of the case, the wheelwork layout may be reversed relative to the axis X (moving gear 24 to the location of gear 20, and gear 25 to suit), where necessary to arrange for the shafts 3 and 7 to rotate oppositely from the configuration shown. This would be useful where two counter-rotating axles are to be operated through two serially coupled reduction units. Also, this reduction unit would be adapted for use in gear motors.

## Claims

1. A right-angle gear reduction unit of a type which comprises a case (2) having two opposite walls (2c, 2d), a drive input shaft (3), a bevel gear pair (12) comprising a pinion (16) and gear (20) in mesh relationship with each other, a first gear reduction stage (11) between the drive input shaft and the bevel pinion gear in said pair, a drive output shaft (7) laid within said case along an orthogonal axis to the axis of the drive input shaft, and a second reduction stage (13) between the drive output shaft and the bevel gear in said pair,
characterized in that said opposite walls (2c, 2d) constitute the outer walls of said case (2) and in that said drive input shaft (3) extends within said case (2) between said opposite walls (2c,d) and is supported at each of its axial ends (3a,b) on the corresponding opposite wall (2c,d).

2. A right-angle gear reduction unit according to Claim 1, wherein said drive input shaft (3) extends outwards from the case (2) with both of its opposite axial ends (3a,b).

3. A right-angle gear reduction unit according to either Claim 1 or 2, wherein said bevel gear pair (20) is a hypoid bevel gear pair.

4. A right-angle gear reduction unit according to any of the preceding claims, wherein said pinion (16) is rotatably supported on said case (2) by means of a support member (119) removably attached to said case.

## Patentansprüche

1. Rechtwinklige Untersetzungsgetriebeeinheit, die ein Gehäuse (2) besitzt, welches zwei gegenüberliegende Wände (2c, 2d) hat, eine Antriebswelle (3), ein Kegelradpaar (12), welches ein Ritzel (16) und ein Zahnrad (20) hat, die miteinander in Eingriff stehen, eine erste Zahnraduntersetzungsstufe (11) zwischen der Antriebswelle und dem Kegelradritzel bei diesem Paar, eine Abtriebswelle (7), die innerhalb des Gehäuses längs einer orthogonalen Achse zur Achse der Antriebswelle liegt, und eine zweite Untersetzungsstufe (13) zwischen der Abtriebswelle und dem Kegelrad bei diesem Paar,
**dadurch gekennzeichnet, daß**
die gegenüberliegenden Wände (2c, 2d) die Außenwände des Gehäuses (2) bilden und die Antriebswelle (3) sich innerhalb des Gehäuses (2) zwischen den gegenüberliegenden Wänden (2c, 2d) erstreckt und an jedem ihrer axialen Enden (3a, 3b) auf der entsprechenden gegenüberliegenden Wand (2c,d) gelagert ist.

2. Rechtwinklige Untersetzungsgetriebeeinheit nach Anspruch 1, wobei die Antriebswelle (3) sich aus dem Gehäuse (2) mit ihren beiden gegenüberliegenden axialen Enden (3a, b) nach außen erstreckt.

3. Rechtwinklige Untersetzungsgetriebeeinheit nach Anspruch 1 oder 2, wobei das Kegelradpaar (20) ein Hypoid-Kegelradpaar ist.

4. Rechtwinklige Untersetzungsgetriebeeinheit nach einem der vorhergehenden Ansprüche, wobei das Ritzel (16) drehbar auf dem Gehäuse (2) mittels eines Lagerteils (119), welches entfernbar am Gehäuse befestigt ist, gelagert ist.

## Revendications

1. Réducteur d'angle d'un type qui comprend un carter (2) ayant deux parois opposées (2c, 2d), un arbre menant d'entrée (3), un engrenage à pignons coniques (12) comprenant un pignon (16) et une couronne (20) en prise l'un avec l'autre, un premier étage réducteur (11) placé entre l'arbre menant d'entrée et le pignon de l'engrenage, un arbre menant de sortie (7) placé dans le carter le long d'un axe perpendiculaire à l'axe de l'arbre menant d'entrée, et un second étage réducteur (13) placé entre l'arbre menant de sortie et la couronne de l'engrenage,
caractérisé en ce que les parois opposées (2c, 2d) sont constituées des parois externes du carter (2) et l'arbre menant d'entrée (3) est placé dans le carter (2) entre les parois opposées (2c, d) et est supporté à chacune de ses extrémités axiales (3a, b) de la paroi opposée correspondante (2c, d).

2. Réducteur d'angle selon la revendication 1, dans lequel l'arbre menant d'entrée (3) dépasse à l'extérieur du carter (2) a ses deux extrémités axiales opposées (3a, b).

3. Réducteur d'angle selon la revendication 1 ou 2, dans lequel l'engrenage à pignons coniques (20) est un engrenage hypoïde.

4. Réducteur d'angle selon l'une quelconque des revendications précédentes, dans lequel le pignon (16) est supporté afin qu'il puisse tourner sur le carter (2) par un organe (119) de support monté de façon amovible sur le carter.
